# EUROPEAN PATENT APPLICATION

(11) **EP 3 715 899 A1**
(43) Date of publication of application: **30.09.2020**
(21) Application number: 20163704.8
(22) Date of filing: 17.03.2020
(51) Int. Cl.: G01S 7/40, G01S 7/41

(54) **A TARGET CALIBRATION METHOD FOR A DEVICE FOR DETECTING OBJECTS IN AN ENVIRONMENT**

(30) Priority: 25.03.2019 IT 201900004295
(71) Applicant: Inxpect S.p.A., 25131 Brescia (BS) (IT)
(72) Inventor: Degani, Alessio, 25131 Brescia BS (IT); Garatti, Marco, 25131 Brescia BS (IT); Tartaro, Andrea, 25131 Brescia BS (IT)
(74) Representative: Perani & Partners S.p.A.

(57) **Abstract**

A method of calibrating a detection device is disclosed for detecting a target in an environment, which comprises providing a reference function of the signal amplitude versus the distance from the detection device, generally as an ideal signal attenuation. It further includes positioning a calibration target in the environment and moving it toward or away from the detection device, while acquiring a succession of reception signals which are processed and combined to generate an acquired target profile. The acquired target profile and the reference function are compared to generate a correction factor, which is used in association with the reference function to generate a correction curve, for instance by means of a product. The correction curve so obtained, after calibration, may be applied to the detection profile to normalize the distance- and environment-related attenuation effects.

## Description

### Field of the invention

The present invention relates to the detection of objects in an environment to be monitored, e.g. using radar technologies. More in detail, the invention relates to a calibration method implemented for a detection device.

### Prior Art

Systems for detecting objects in an environment, such as radar systems, can transmit an electromagnetic signal into an environment to be monitored and receive a signal reflected from the objects to identify their position in the environment.

These systems can be used for safety, both in intrusion alarms and for personnel safety in factories in which hazards occur when moving too close to certain machinery having moving parts.

A critical requirement in these applications is the ability of the device to properly distinguish the different targets. In intrusion alarm systems used by private individuals the device must distinguish the movements of humans from those of pets, birds or other animals, to avoid false alarms. In industrial applications, the device should signal human movements to set machinery in safe mode when operators enter the protected area, i.e. the area near machinery having moving parts.

Target distinction is based on the Radar Cross Section (RCS). RCS is a physical property of the target that varies according to the shape, material and the size of the target and is thus an object-specific property. RCS is indirectly obtained from the power received (backscattered) from the target toward the receiver. Nevertheless, the backscattered power depends on various factors including the amplitude of the electromagnetic signal, the distance of the target from the detection device and the mounting conditions of the device. Since RCS can be only indirectly estimated, when the distance from the receiver and the power of the target are known, power should be made independent of target position by calibration.

### Problem of the prior art

In certain prior art detection systems, the detection device is calibrated using installation curves of the radar that are standard and do not adapt to the environment and to mounting setup. Nevertheless, the applicant found that such calibration is inaccurate and causes a great number of false alarms.

### SUMMARY OF THE INVENTION

The object of the present invention is to obviate the aforementioned prior art problems, and particularly to provide a calibration method for a detection device, which can discriminate targets while accounting for the environment and the mounting setup.

This and other objects are fulfilled by a method of calibrating a device for detecting objects, or methods of detecting objects in an environment as defined in any of the accompanying claims. In particular, the device performs its calibration by transmitting and receiving the electromagnetic signal of a calibration target that is being moved in the field of view. Calibration is obtained by combining the reflected signals and comparing them with a reference signal amplitude function depending on the distance from the device and the mounting setup of the device. This comparison allows a correction factor to be calculated, which minimizes the error between the combination of the signals and the reference function. This reference function is multiplied by so calculated the correction factor to generate the correction curve used for correction of the signals acquired thereafter. Thus, the method allows calibrating the signal amplitude of targets while accounting for the environment and the mounting setup.

### DETAILED DESCRIPTION

The present invention discloses a calibration method for a device for detecting targets in an environment to be monitored. The detection system is preferably a radar system.

The detection device transmits electromagnetic signals via an antenna. Later, the signals reflected from the environment and received by the device are mixed with the signals that have been transmitted and processed to obtain a baseband signal. The baseband signal has a frequency that is equal to the difference between the frequencies of the transmitted signals and the received signals.

Later, the baseband signal is processed to generate a detection profile with well-known methods, e.g. comprising a Fourier transformation. The detection profile is analyzed to check whether the target to be identified is in the environment or not. Such check is made by identifying amplitude peaks above a distinctive threshold.

Once the device has been installed in the desired environment, the device must be calibrated for distinguishing the target irrespective of the distance of the target from the device in the environment. This is because, as discussed above, the same target may originate reflected signals of different amplitudes depending on its position in the environment.

As explained in greater detail below, the calibration method provides a correction curve as a function of distance. In one aspect of a method of detecting a target in the environment, which is also an object of the invention, at each detection after calibration, the correction curve is applied to the detection profile to generate an output profile. For example, the detection profile is divided by the correction curve.

In one aspect of the invention, calibration requires a calibration target to be moved in the field of view of the detection device and a succession of signals reflected from the moving target to be acquired. The target must move along the field of view of the device from a location selected as the origin in the environment, for example the target may move along the normal of the device.

The calibration target may be a man, a machine or any target to be discriminated. For example, depending of the installation environment, discrimination may be desired between a human target and an animal target for safety of an environment, or between a human and a machine in industrial applications and so on. In the preferred embodiment, the target moves by walking.

The device is able to measure the distance of the target from the device by using known techniques and may be optionally able to measure the angle within the field of view of the target, known as azimuthal angle. In this case, calibration may be carried out while also accounting for the angle with the normal for each distance from the receiver. Therefore, calibration results in the generation of a correction curve with values that generally differ according to the position of the target, in terms of both distance and azimuthal angle. The calculation of the correction curve in this case is explained below in further detail.

Once the reflected signals have been acquired, the signals are processed and combined with one another to generate the acquired target profile. The acquired target profile comprises, for each distance, an amplitude value derived from the corresponding reception signal of the succession, for which the target is detected to be at said specific distance. More in detail, the construction of the acquired target profile involves the generation of a sequence of distance-dependent amplitude profiles, which corresponds to the sequence of reflected signals of the sequence. The amplitude values of the acquired target profile are each extracted from a corresponding amplitude profile of the sequence.

For the calibration, a reference function for signal amplitude must be provided, which depends on the distance and optionally on the azimuthal angle of the target with respect to the detection device. The correction curve will be obtained using the reference function and a correction factor. In the preferred embodiment, the reference function is multiplied by the correction factor.

In particular, the reference function for signal amplitude is represented by an ideal signal attenuation varying as a function of the distance of the target from the device. This attenuation is calculated using the monostatic radar equation, which establishes that the power of the received signal is proportional to the RCS of the target and is inversely proportional to the distance of the target from the device to the fourth power.

In addition, the reference function also accounts for the information about the positioning setup of the detection device, relating to the way the device is installed in the environment in which it is placed. Preferably, the setup information relates to the height and tilt of the device relative to the floor of the environment.

In order to obtain a correction curve that is as close as possible to the acquired target profile, the acquired target profile is compared with the reference function to generate the correction factor. In particular, the comparison includes minimizing the mean-square error between the acquired target profile and the product of the reference function and the correction factor.

Advantageously, the calculation described for the correction curve accounts for the amount of attenuation of the reflected signal at each distance, as measured for the specific environment in which the device is installed. As a result of the comparison between the detection profile and the correction curve, a single target in the output profile generates amplitude peaks that are substantially independent of the distance.

If a correction curve is desired that also accounts for the azimuthal angle, one of the following exemplary procedures may be followed. In one example, the target moves along a non-straight path in the field of view of the device, preferably such that for each azimuthal angle of a plurality of azimuthal angles in the field of view the target is moved to a plurality of distances. This will provide an acquired target profile for each azimuthal angle. Therefore, the method comprises, at each angle, comparing the acquired target profile for that angle with the reference function to generate a correction factor for each angle. Finally, a correction curve is generated at each calculated angle, using each time the correction factor of that angle and the reference function.

According to another example, the angular correction may be calculated using the radiation pattern of the antenna. Here, the target may just move along the normal of the device. For each distance along the normal, the measured signal will be weighed according to the radiation pattern of the antenna. In other words, the correction curve, external to the normal, is calculated, for each distance, by multiplying the value taken by the correction curve along the normal for that distance by an attenuation value provided by the antenna pattern.

A skilled person may obviously envisage a number of equivalent changes to the above discussed variants, without departure from the scope defined by the appended claims.

## Claims

1. A method of calibrating a detection device for detecting a target in an environment, the detection device being configured to generate transmission signals and receive reception signals, the calibration method comprising the steps of:
- providing a reference function of the signal amplitude versus the distance from the detection device,
- locating and moving a calibration target from a point of origin in said environment toward or away from the detection device and acquiring a succession of reception signals, processing and combining together the reception signals to generate an acquired target profile,
- comparing the acquired target profile with the reference function to generate a correction factor,
- generating a correction curve calculated using the correction factor and the reference function.

2. A method as claimed in claim 1, wherein said reference function of the signal amplitude is represented by an ideal signal attenuation.

3. A method as claimed in claim 2, wherein said reference function of the signal amplitude is calculated according to location setup information of the detection device.

4. A method as claimed in claim 3, wherein said location setup information of the detection device comprises information about the height and inclination of said detection device with respect to the floor.

5. A method as claimed in any of claims 2 to 4, wherein said ideal signal attenuation is given by the monostatic radar equation.

6. A method as claimed in any of claims 1 to 5, wherein said reference function of the signal amplitude is dependent on the distance and on an angle within the field of view of the detection device.

7. A method as claimed in any of claims 1 to 6, wherein said reference function of the attenuation of the signal amplitude is inversely proportional to the distance to the power of four.

8. A method as claimed in any of claims 1 to 7, wherein said correction factor is calculated in such a manner as to minimize the mean square error between the acquired target profile and the product of the reference function and the correction factor.

9. A method as claimed in any of the preceding claims, wherein the acquired target profile comprises, for each distance, an amplitude value derived from a corresponding reception signal of the succession, for which the target is detected to be at said distance.

10. A method of detecting a target using a detection device, comprising:
- calibrating the detection device with the calibration method as claimed in any of claims 1 to 9,
- detecting a reception signal and deriving a corresponding detection profile,
- applying the correction curve to the detection profile, to generate an output profile.
